# EUROPEAN PATENT APPLICATION

(11) **EP 2 635 075 A1**
(43) Date of publication of application: **04.09.2013**
(21) Application number: 11835999.1
(22) Date of filing: 06.10.2011
(51) Int. Cl.: H04W 52/08, H04W 52/24

(54) **MOBILE COMMUNICATION SYSTEM, BASE STATION, AND TRANSMISSION POWER CONTROL METHOD**

(30) Priority: 29.10.2010 JP 2010244079
(71) Applicant: NTT DoCoMo, Inc., Tokyo 100-6150 (JP)
(72) Inventor: GOTO, Yoshikazu, Tokyo 100-6150 (JP); OOKUBO, Naoto, Tokyo 100-6150 (JP)
(74) Representative: HOFFMANN EITLE
(86) International application number: PCT/JP2011/073058
(87) International publication number: WO 2012/056859

(57) **Abstract**

When a cell in a first system which follows a transmission loss to control an uplink transmit power neighbors a cell in a second system which follows channel fading to control an uplink transmit power, a quality of an uplink signal in the cell in the first system is maintained. The base station includes an uplink signal and interference power measuring unit which measures a desired signal power and an interference signal power from a received signal; an SIR calculating unit which calculates a receive quality for transmit power control from the desired signal power and the interference signal power; a TPC command generating unit which generates transmit power control information in accordance with results of comparing the receive quality for the transmit power control with a predetermined target receive quality; and a signal transmitting unit which transmits, to a user apparatus, a control signal which includes the transmit power control information and resource information which indicates radio resources for the uplink signal, wherein the SIR calculating unit calculates the receive quality for the transmit power control with a calculating method in accordance with communications conditions in a cell of the base station.

## Description

### BACKGROUND OF THE INVENTION

### 1. Field of the Invention

The present invention relates generally to the technical field of mobile communications, and specifically to mobile communications systems, base stations and transmit power control methods.

### 2. Description of the Related Art

At the present, mobile communications schemes to succeed the Third Generation are being studied by a standardization body 3GPP. More specifically, schemes to succeed Wideband-Code Division Multiple Access (W-CDMA) include Enhanced UpLink (EUL), Long Term Evolution (LTE), LTE-Advanced (LTE-A), etc. In any of these schemes, a transmit power needs to be controlled properly. More specifically, from a viewpoint of taking into account a maximum transmit power of a user apparatus, the transmit power in uplink has to be controlled properly.

For the Third Generation system such as W-CDMA or CDMA 2000, control of uplink transmit power is performed at high speed such that it follows channel fading fluctuations. A base station measures a receive quality of a communications channel continuously (for each slot), generates a Transmit Power Control bit (a TPC bit) such that a subsequent receive quality approaches a target receive quality, and reports it to a mobile station. Based on the TPC bit reported, a power of an uplink signal to be transmitted next is determined. The TPC bit, which takes binary values, shows that a subsequent transmit power increases (by + 1 dB) or decreases (by - 1 dB) relative to a previous transmit power. For this scheme, an uplink signal quality depends exclusively on a strength of the transmit power.

On the other hand, for an LTE system, control of the uplink transmit power is performed at a low speed such that it follows a transmission loss or a path loss of a channel. The base station measures a receive quality using a physical uplink shared channel (PUSCH), which is received aperiodically, or a sounding reference signal (SRS), which is received periodically, generates a transmit power control bit (TPC bit) such that a next receive quality approaches a target receive quality, and reports it to the mobile station. Based on the TPC bit reported, the mobile station determines the power of the uplink signal to be transmitted next. The TPC bit indicates whether a power for transmitting next changes +1 dB, -1 dB, or +3 dB; or does not change (changes 0 dB). In order to deal with rapidly changing fading fluctuations, an adaptive modulation and coding (AMC) scheme and a hybrid automatic repeat request (HARQ) scheme are used. A transmit power control in the LTE is described, for example, in Non-Patent Document 1.

### Non-Patent Document

Non-Patent document 1: 3GPP TS36.213, 5.1 Uplink power control, V8.6.0(2009-03)

### SUMMARY OF THE INVENTION

### [Problem(s) to be solved by the Invention]

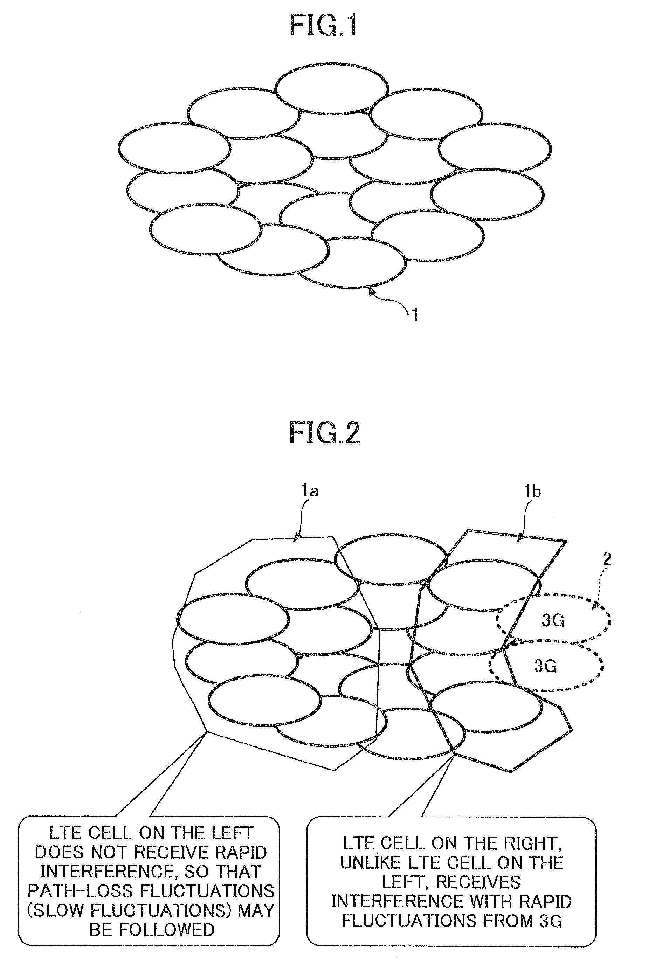

As shown in FIG. 1, it is anticipated that, in the future, a whole of a geographical area in which mobile communications are possible will be covered by a cell 1 of an LTE scheme (an LTE cell). As described above, for the LTE scheme, control of the uplink transmit power is performed at a low speed such that it follows a channel path loss, while the AMC and HARQ scheme is used for dealing with rapidly changing fading fluctuations. Therefore, the uplink transmit power is slowly controlled, so that inter-cell interference is relatively small.

However, it is also anticipated that the LTE system and the Third Generation system coexist before the whole geographical area, in which mobile communications are possible, is covered only by cells of the LTE scheme (the LTE cells).

FIG. 2 shows how a part (a right side) of the region in which mobile communications are possible is covered by Third Generation system cells (3G cells) 2, and the remaining part is covered by the LTE cells. For the Third Generation systems such as the W-CDMA system, the control of the uplink transmit power is performed at high speed such that it follows channel fading fluctuations. Therefore, the 3G cell temporarily causes strong interference in surrounding cells. Unlike the LTE cell 1a on the left side, the LTE cell 1b shown on the right side instantaneously receives strong interference from the 3G cell, possibly causing an uplink signal quality to deteriorate.

In order to maintain the uplink signal quality in the LTE cell which neighbors the 3G cell, it is possible to perform transmit power control in the LTE cell at high speed in a manner similar to that in the 3G cell. However, performing in this way could possibly cause an uplink transmit power, which is strengthened for an uplink signal from a certain mobile station so as to be able to oppose interference, to become interference on a different mobile station, such that the different mobile station repeats demanding of a stronger uplink transmit power, possibly causing the uplink transmit power to reach an upper limit value.

An object of the present invention is to maintain an uplink signal quality in a first system cell which follows a path loss to control an uplink transmit power when a cell of the first system and a cell of a second system which follows channel fading to control uplink transmit power are neighbors.

According to one embodiment of the present invention, there is provided a base station in a first system which follows a transmission loss to control an uplink transmit power, wherein a part of cells in the first system neighbors cells in a second system which follows channel fading to control an uplink transmit power, the base station including: an uplink signal and interference power measuring unit which measures a desired signal power and an interference signal power from a received signal; an SIR calculating unit which calculates a receive quality for transmit power control from the desired signal power and the interference signal power; a TPC command generating unit which generates transmit power control information in accordance with results of comparing the receive quality for the transmit power control with a predetermined target receive quality; and a signal transmitting unit which transmits, to a user apparatus, a control signal which includes the transmit power control information and resource information which indicates radio resources for an uplink signal, wherein the SIR calculating unit calculates the receive quality for the transmit power control with a calculating method in accordance with communications conditions in a cell of the base station.

### [Advantage of the Invention]

An embodiment of the present invention makes it possible to secure an uplink signal quality in a first system cell which follows a transmission loss to control an uplink transmit power when a cell of the first system and a cell of a second system which follows channel fading to control uplink transmit power are neighbors.

### BRIEF DESCRIPTION OF THE DRAWINGS

FIG. 1 is a diagram illustrating how the whole area in which mobile communications are possible is covered by LTE cells;
FIG. 2 is a diagram illustrating how the whole area in which mobile communications are possible is covered by 3G cells and the LTE cells;
FIG. 3 is a diagram illustrating an overview of a transmit power control;
FIG. 4 is a diagram illustrating a relationship between a length of an averaging interval; a receive SIR; and an uplink transmit power: and
FIG. 5 is a functional block diagram illustrating a base station (eNB) which is used in embodiments.

### DESCRIPTION OF THE PREFERRED EMBODIMENTS

### [Best Mode of Carrying Out the Invention]

Embodiments of the present invention are described from the following viewpoints:
1. Overview of transmit power control
2. Calculation of SIR
   2.1 Averaging interval
   2.2 Upper limit value of interference signal power
   2.3 Offset
   2.4 Target SIR
   2.5 Initial transmit power
   2.6 Signal type
3. Base station

### Embodiment 1

### 1. Overview of transmit power control

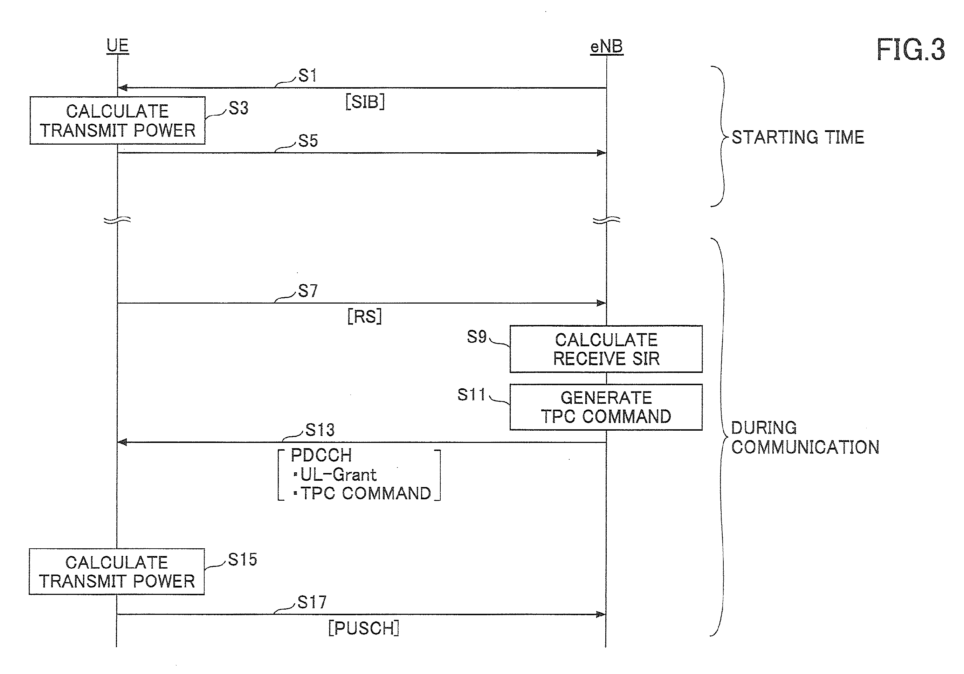

FIG. 3 illustrates an overview of transmit power control according to an embodiment of the present invention. A user apparatus (UE) is visiting a cell of an LTE system. The user apparatus, which is typically a mobile phone, may be an information terminal, a smart phone, a personal digital assistant (PDA), a portable personal computer, etc. Moreover, the user apparatus (UE), which is typically a mobile station, may be a fixed station.

In step S1, the user apparatus (UE) receives a broadcast signal from a base station (eNB) before starting communications. The broadcast signal (BCH), which is a signal for reporting so-called "system information" to the user apparatus (UE), includes master information blocks and system information blocks (MIB and SIB). In general, the master information block (MIB) includes information which is necessary at a minimum for communicating in the cell, while the system information block (SIB) includes further information. In the present embodiment, in particular, information on an initial value of an uplink transmit power that is included in the system information block (SIB) is obtained by the user apparatus (UE).

In step S3, the user apparatus (UE) calculates a transmit power when an uplink signal is transmitted based on a path loss calculated from a downlink reference signal and information obtained in step S1.

In step S5, the user apparatus (UE) transmits the uplink signal using the power calculated in step S3.

In this way, when starting communications, the user apparatus (UE) determines a transmit power based on information obtained from broadcast information. Transmit power control during communications is shown in steps S7 and beyond.

In step S7, the user apparatus (UE) transmits some uplink signal (PUSCH or PUCCH). This uplink signal includes a reference signal (RS). The reference signal is a sounding reference signal (SRS) or a demodulation reference signal.

In step S9, the base station (eNB) receives an uplink signal, extracts the reference signal, and measures a receive quality based on the reference signal. The receive quality or a receive level, which is typically expressed in terms of SIR as in the present embodiment, may be expressed in any appropriate indicator which is known in the art. For example, it may be expressed in terms of receive power, field strength RSSI, a desired wave receive power RSCP, S/N, Ec/N₀, etc.

In step S11, the base station (eNB) generates a transmit power control command (a TPC command) based on a received SIR calculated in step S9. The base station (eNB) compares a magnitude of the receive SIR and a SIR to be a target (a target SIR). If the receive SIR is smaller than the target SIR, a TPC command is generated which indicates that the uplink transmit power should be increased. If the receive SIR is substantially smaller than the target SIR, a TPC command is generated which indicates that the uplink transmit power needs to be changed by +3dB. If the receive SIR is a little smaller than the target SIR, a TPC command is generated which indicates that the uplink transmit power needs to be changed by +1 dB. If the receive SIR is larger than the target SIR, a TPC command is generated which indicates that the uplink transmit power needs to be decreased, or, more specifically, a TPC command is generated which indicates that the uplink transmit power needs to be changed by -1 dB. If the receive SIR is at the same level as the target SIR, a TPC command (0 dB) is generated which indicates that the uplink transmit power needs to be maintained.

In step S13, the base station (eNB) reports a downlink control signal (PDCCH) to the user apparatus (UE). The downlink control signal (PDCCH) includes a TPC command for the uplink transmit power, information on resources allocated to uplink communications (UL Scheduling Grant), information on resources allocated to downlink communications (DL Scheduling Grant), etc.

In step S15, the user apparatus (UE) checks information on resources allocated to uplink communications (UL-Grant), and causes power to be changed or not changed by +1dB, -1dB, or +3dB based on the TPC command for the uplink transmit power to calculate the uplink transmit power when transmitting next time.

In step S17, the user apparatus (UE) transmits an uplink signal (PUSCH) using the uplink transmit power calculated in step S15. During communications, a procedure of step S7 or S17 is repeatedly performed, so that the uplink transmit power is properly controlled.

As described with reference to FIG. 2, for an LTE cell which is remote from a 3G cell which use both AMC and HARQ; and a slow transmit power control such that it follows a path loss or a transmission loss to secure a sufficient uplink signal quality. On the other hand, for the LTE cell near the 3G cell, a strong interference by fading fluctuations may be received instantaneously, causing a possibility of not being able to secure the sufficient uplink signal quality. In the present embodiment, in step S9, when calculating the receive SIR, measures described below are performed to generate a TPC command which is suitable for communications conditions.

### 2. Calculation of SIR

### 2.1 Averaging interval

When the base station (eNB) calculates the receive SIR, an instantaneous value of a desired signal power (S) and an instantaneous value of an interference signal power (I) are measured from the received uplink signal, the instantaneous value of the desired signal power is averaged over a first period and the instantaneous value of the interference signal power is averaged over a second period. The first period and the second period for averaging may be the same or different. In general, when an averaging period is long, the averaged desired signal or interference signal (eventually the receive SIR) tends to follow the path loss. When the averaging period is short, the averaged desired signal or interference signal (or the receive SIR) tends to follow instantaneous fading.

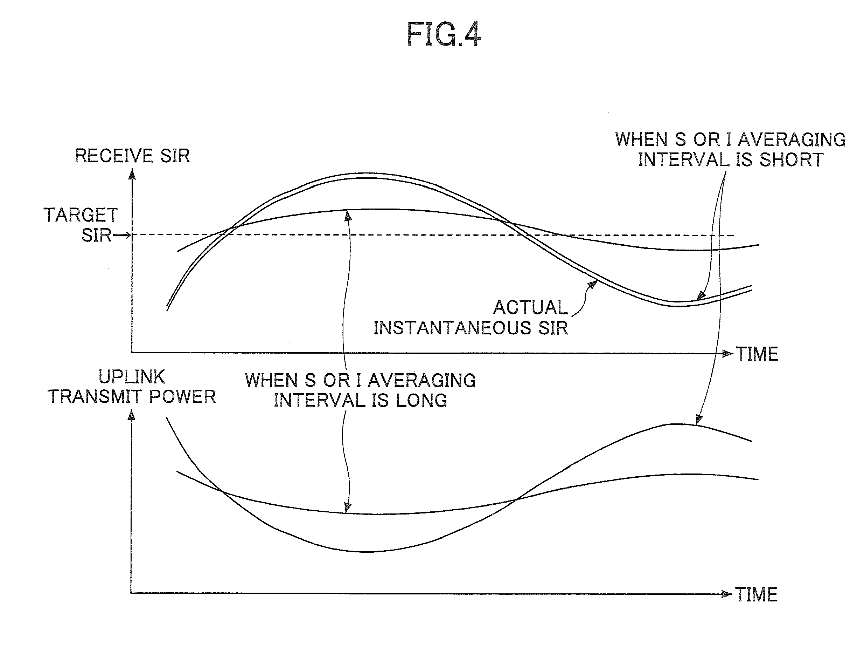

FIG. 4 shows a relationship among a length of an averaging interval; a receive SIR; and an uplink transmit power. An upper graph shows a relationship between the length of the averaging interval and the receive SIR. A lower graph shows a relationship between the length of the averaging interval and the uplink transmit power based on the TPC command. In the upper graph it is also shown how an actual instantaneous SIR fluctuates (when there is a large fluctuation in the instantaneous SIR) . As shown, when an averaging interval for calculating the receive SIR is short, the receive SIR follows the actual instantaneous SIR. As an example, when a sub-frame, which is a unit of allocation of radio resources, is 1ms, a short averaging interval is approximately 10ms. Specific numerical values are not mandatory to the present embodiment, so that any appropriate numerical values may be used. On the other hand, when an averaging interval for calculating the receive SIR is long, the receive SIR does not follow the actual instantaneous SIR, but follows the path loss fluctuations.

Based on such a receive SIR, the TPC command is generated, and, in accordance with this TPC command, the uplink transmit power is determined. When the averaging interval is short, the upper transmit power which is calculated based on the TPC command and the receive SIR which follows the actual instantaneous SIR rapidly fluctuates in accordance with the actual instantaneous SIR such that the receive SIR is caused to approach the target SIR. On the other hand, when the averaging interval is long, the uplink transmit power which is calculated based on the TPC command and the receive SIR which follows the path loss slowly fluctuates in accordance with the path loss.

In a certain LTE system cell (LTE cell), as the actual instantaneous SIR shown, when there is a large channel state change with time, it is considered that the cell, which is close to the Third Generation system (a 3G cell), receives a relatively large interference from the 3G cell. The receive SIR is calculated by a ratio (S/I) of a desired signal power (S) and an interference signal power (I) as fluctuations of the receive SIR is primarily caused by fluctuations of the interference signal power. Therefore, for such an LTE cell, it is necessary to accurately identify the actual instantaneous SIR by setting the averaging interval short and causing the uplink power to fluctuate slowly. Otherwise, it does not become possible to secure an uplink signal quality in the LTE cell due to interference from the 3G cell. Conversely, when there is not a large channel state change with time in the LTE cell, it is considered that the cell is remote from the 3G cell. Therefore, for such an LTE cell, it is preferable to set the averaging interval long and not to cause interference on neighboring cells.

In this way, in the LTE cell, when the channel fluctuation or the interference signal power is large, the averaging interval for calculating the SIR is set short. Whether the channel fluctuation or the interference signal power is large may be determined by whether a variance of the interference signal power over a certain prescribed period in the past is larger than a predetermined value. The variance may be an average value. The predetermined value may be calculated from an interference power which is to be cumulative X% in a cumulative distribution function (c.d.f.) of a power value, for example.

For the short averaging interval, when the receive SIR worsens, the base station (eNB) may issue a TPC command to increase the transmit power and report it to the user apparatus (UE) to achieve a rapid improvement of the receive SIR. If the receive SIR becomes excessively large relative to the target SIR, the base station (eNB) may issue a TPC command which decreases the transmit power and report it to the user apparatus (UE) to rapidly reduce the excessive quality. On the other hand, if a variance of the interference signal power over a certain prescribed period in the past is not larger than a predetermined value, the averaging interval for calculating SIR is set long. In this way, the receive SIR and the uplink transmit power only changes slowly to follow the path loss, making it possible to increase a signal quality with AMC and HARQ while suppressing other cell interference.

Adjusting of an averaging interval may be performed with respect to a first period for averaging a desired signal power, with respect to a second period for averaging an interference signal power, or with respect to both periods.

The averaging interval may be adaptively adjusted by the base station (eNB) in an autonomous manner in accordance with communications conditions. Alternatively, in lieu of performing such an autonomous adaptive adjustment, a length of the averaging interval may be set for a base station as station data in a fixed manner. For example, a short averaging interval is set for a base station which is close to a 3G cell on a fixed manner, while a long averaging interval is set for a base station which is remote from the 3G cell on a fixed manner.

### 2.2 Upper limit value of interference signal power

As described above, if the receive SIR measured by the base station (eNB) is lower than the target SIR, the base station (eNB) reports, to the user apparatus (UE), a TPC command for strengthening the uplink transmit power such that a next receive SIR approaches the target SIR. In response thereto, the user apparatus (UE) transmits a signal with a stronger uplink transmit power. However, a vicious cycle occurs in which, when such transmit power control continues between mobile stations which cause interference on each other, transmission is conducted with a stronger power, causing a larger interference on each other.

In order to deal with such a problem, it is possible to modify an interference signal power (I) which is used in calculating the receive SIR. As described above, the base station (eNB) measures an instantaneous value of a desired signal power (S) and an instantaneous value of an interference signal power (I) from a received uplink signal and averages the instantaneous values of the desired signal power and the interference signal power. A ratio of the averaged desired signal power and the interference signal power is calculated as the receive SIR. In the present embodiment, if the instantaneous value or the average value (I) of the interference signal power exceeds a predetermined upper limit value (Imax), the upper limit value (I) (max) is used, instead of the instantaneous value or the average value (I) of the interference signal power to average the interference signal power. As a result, the receive SIR takes a value which is larger than an original value (S/I) < (S/Imax)), making it possible to suppress an excessive increase of the uplink transmit power.

Replacing a value of an interference signal power with a predetermined upper limit value may be performed on a basis such that the performing is limited to when the channel fluctuation or the interference signal power is large, or may be performed all the time. Whether the channel fluctuation or the interference signal power is large may be determined by whether a variance of the interference signal power over a certain prescribed period in the past is larger than a predetermined value, for example. The variance may be an average value. The predetermined value may be calculated from an interference power which is to be cumulative X% in a cumulative distribution function (c.d.f.) of a power value, for example.

### 2.3 Offset

From a point of view of making sure that the receive SIR does not become excessively low, it is also possible, not only to set an upper limit value to the interference signal power, but also to add an offset to the interference signal power. The offset in this case takes a negative value, and a value in which an offset is added to the interference signal power (I+Δ=I-|Δ|) becomes smaller than an actual interference signal power. The receive SIR which is calculated in this way also becomes a value which is larger than an original value, making it possible to suppress an excessive increase in uplink transmit power. Conversely, taking a positive offset causes the value to be larger than an actual interference power. The receive SIR calculated in this way takes a value which is smaller than an original value, making it possible to make the uplink transmit power relatively large and to improve an uplink signal quality in the cell in question.

Adding an offset to the interference signal power may be performed on a limited basis for a case such that the channel fluctuation or the interference signal power is large or may be performed all the time. Whether the channel fluctuation or the interference signal power is large may be determined by whether a variance of the interference signal power over a certain prescribed period in the past is larger than a predetermined value, for example. The variance may be an average value. The predetermined value may be calculated from an interference power which is to be cumulative X% in a cumulative distribution function (c.d.f.) of a power value, for example.

Moreover, the offset value may be determined based on information which shows a configuration of neighboring cells, a standard deviation or a variance of an interference power which is determined in a measuring interval of the averaging process may be used for the offset value, or the offset value may be the standard deviation or the variance to which a correction coefficient is multiplied.

### 2.4 Target SIR

From a point of view of improving the receive SIR, it is also possible to increase the target SIR in transmit power control. For example, when the channel fluctuation or the interference signal power is large, it is possible to increase the target SIR. Whether the channel fluctuation or the interference signal power is large may be determined by whether a variance of the interference signal power over a certain prescribed period in the past is larger than a predetermined value, for example. The variance may be an average value. The predetermined value may be calculated from an interference power which is to be cumulative X% in a cumulative distribution function (c.d.f.) of a power value, for example.

### 2.5 Initial transmit power

From a point of view of improving the receive SIR, it is possible to increase in advance an initial transmit power which is reported to the user apparatus (UE) by the base station (eNB). For example, if the channel fluctuation or the interference signal power is large, it is possible to set the initial transmit power reported to the user apparatus (UE) (more specifically, information reported in step S1 in FIG. 3) larger than that when a channel fluctuation, etc., is small. On the contrary, if the channel fluctuation or the interference signal power is not large, it is possible to set the initial transmit power reported to the user apparatus (UE) (more specifically, the information reported in step S1 in FIG. 3) smaller than that when a channel fluctuation, etc., is large. Whether the channel fluctuation or the interference signal power is large may be determined by whether a variance of the interference signal power over a certain prescribed period in the past is larger than a predetermined value, for example. The variance may be an average value. The predetermined value may be calculated from an interference power which is to be cumulative X% in a cumulative distribution function (c.d.f.) of a power value, for example.

The process described in (2.1)-(2.5) may be performed, not only in accordance with the channel fluctuation or the interference signal power, but also in accordance with information which shows a configuration of a neighboring cell. When the base station (eNB) may use the information which shows the configuration of the neighboring cell, if it is known that the neighboring cell is a 3G cell, at least one may be performed of: shortening the averaging interval (2.1); providing an upper limit value for the interference signal power (2.2); adding an offset to the interference signal power (2.3); improving a target SIR (2.4); and setting the initial transmit power large (2.5). Alternatively, if it is known that a neighboring cell is an LTE cell, at least one may be performed of: lengthening the averaging interval (2.1); providing the upper limit value for the interference signal power (2.2); adding the offset to the interference signal power(2.3); worsening the target SIR (2.4); and setting the initial transmit power weak (2.5). The information which indicates the configuration of the neighboring cell may be obtained by interactions between the base stations, or may be reported from an upper-level apparatus such as an exchange station.

### 2.6 Signal type

Adjusting the averaging interval (2.1); providing the upper limit value for the interference signal power (2.2); adding the offset to the interference signal power; improving the target SIR (2.3) ; worsening the target SIR (2.4); and setting the initial transmit power strong (2.5) may be performed each time in accordance with a variance of the interference signal power over a certain prescribed period in the past, or may be performed all the time. Moreover, they may be performed in accordance with a signal type.

For example, for a communications signal to which is applied semi-persistent scheduling (SPS) or a communications signal for a control sequence, a process of shortening the averaging interval is performed and, for a different communications signal, one of a process of lengthening the averaging interval; a process of replacing an interference signal power which exceeds a predetermined value by an upper limit value; and a process of adding an offset to an SIR may be performed. A communications signal to which the SPS is applied is, more specifically, a voice signal (VoIP), real-time data, etc. It is difficult to retransmit such a signal, and it should be ensured that receiving can be performed in an initial transmission, so that the receive SIR preferably follows instantaneous fading.

### 3. Base station

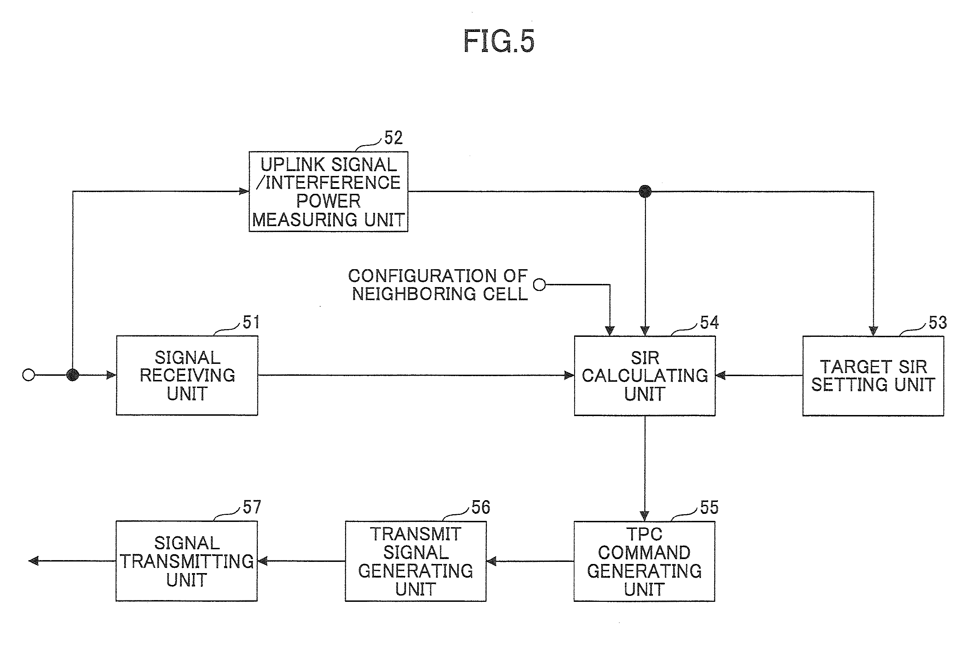

FIG. 5 shows a functional block diagram of a base station (eNB) used in an embodiment of the present invention. FIG. 5 shows what is particularly relevant to the present embodiment out of various functional elements of the base station (eNB). Generally, the base station (eNB) in the present embodiment appropriately sets at least one of: (1) an average interval of a desired signal power or an interference signal power; (2) an upper limit value of the interference signal power; (3) an offset value to be added to the interference signal power; (4) a target SIR; and (5) an initial transmit power based on (a) a variance of the interference signal power over a certain prescribed period in the past; (b) an average value thereof; and (c) an interference power to be cumulative X% in cumulative distribution function (c.d.f) of a power value, or based on (d) a signal type.

The base station (eNB) includes a signal receiving unit 51; an uplink signal and interference power measuring unit 52; a target SIR setting unit 53; an SIR calculating unit 54; a TPC command generating unit 55; a transmission signal generating unit 56; and a signal transmitting unit 57.

The signal receiving unit 51 receives an uplink signal (PUCCH, PUSCH) transmitted by the user apparatus (UE).

The uplink signal and interference power measuring unit 52 measures a desired signal power and an interference signal power from a received uplink signal. The uplink signal and interference power measuring unit 52 stores a measured value (an instantaneous value of the desired signal power and the interference signal power). An instantaneous value in the past that is used in averaging the instantaneous values is saved in the uplink signal and interference power measuring unit 52. The uplink signal and interference power measuring unit 52 calculates a variance of an interference signal power over a certain prescribed period in the past and performs an operation described in (2.1)-(2.6) based on whether the variance is larger than a predetermined value. For example, if the variance is large, at least one is performed of shortening the averaging interval; setting an upper limit value to the interference signal power; adding an offset to the interference signal power; and improving a target SIR. When the operation described in (2.6) in the above is performed, at least one is performed of, in accordance with a signal type, shortening the averaging interval, setting an upper limit value to an interference signal power; adding an offset to an interference signal power; and improving a target SIR.

The target SIR setting unit 53 sets a target SIR in accordance with a variance of the interference that is reported from the uplink signal and interference power measuring unit 52.

The SIR calculating unit 54, in principle, divides an average value over a first period of an instantaneous value of a desired signal power by an average value over a second period of an instantaneous value of an interference signal power to calculate a receive SIR. Based on the method described in (2.1)-(2.6) in the above, a value which is different from the actual receive SIR is calculated as the receive SIR for transmit power control.

In accordance with each of the receive SIR being larger than the target SIR; the receive SIR being about the same as the target SIR; and the receive SIR being smaller than the target SIR, the TPC command generating unit 55 generates a TPC command which indicates transmit power control information.

The transmission signal generating unit 56 generates a downlink signal including the TPC command. The downlink signal includes a downlink control signal (PDCCH) and a downlink shared data signal (PDSCH). The TPC command is included in the downlink control signal (PDCCH) together with resource information.

The signal transmitting unit 57 transmits the downlink signal to the user apparatus (UE).

As described above, while the present invention is described with reference to specific embodiments, the respective embodiments are merely exemplary, so that a skilled person will understand variations, modifications, alternatives, replacements, etc. For example, the present invention may be applied to any appropriate mobile communications system which performs transmit power control. For example, the present invention may be applied to an LTE system, an LTE Advanced (LTE-A) system, etc. While specific numerical value examples are used to facilitate understanding of the present invention, such numerical values are merely examples, so that any appropriate value may be used unless specified otherwise. A breakdown of embodiments or items is not essential to the present invention, so that matters described in two or more items may be used in combination as needed, or matters described in a certain item may be applied to matters described in a different item as long as they do not contradict. For convenience of explanation, while the apparatuses according to the embodiments of the present invention are explained using functional block diagrams, such apparatuses as described above may be implemented in hardware, software, or a combination thereof. The present invention is not limited to the above embodiments, so that variations, modifications, alternatives, and replacements, etc., are included in the present invention without departing from the spirit of the present invention.

The present international application claims priority based on Japanese Patent Application No. 2010-244079 filed on October 29, 2010, the entire contents of which are hereby incorporated by reference.

### [Description of Notations]

- 1, 1a, 1b: LTE cell
- 2: 3G cell
- 51: Signal receiving unit
- 52: Uplink signal and interference power measuring unit
- 53: Target SIR setting unit
- 54: SIR calculating unit
- 55: TPC command generating unit
- 56: Transmit signal generating unit
- 57: Signal transmitting unit

## Claims

1. A base station in a first system which follows a transmission loss to control an uplink transmit power, wherein a part of cells in the first system neighbors cells in a second system which follows channel fading to control an uplink transmit power, the base station comprising:
an uplink signal and interference power measuring unit which measures a desired signal power and an interference signal power from a received signal;
an SIR calculating unit which calculates a receive quality for transmit power control from the desired signal power and the interference signal power;
a TPC command generating unit which generates transmit power control information in accordance with results of comparing the receive quality for the transmit power control with a predetermined target receive quality; and
a signal transmitting unit which transmits, to a user apparatus, a control signal which includes the transmit power control information and resource information which indicates radio resources for an uplink signal, wherein the SIR calculating unit calculates the receive quality for the transmit power control with a calculating method in accordance with communications conditions in a cell of the base station.

2. The base station as claimed in claim 1, wherein the SIR calculating unit averages a desired signal power over a first period, averages an interference signal power over a second period, and calculates the receive quality for the transmit power control from the averaged desired signal power and the interference signal power; and wherein, when a magnitude of a channel fluctuation or the interference signal power measured by the uplink signal and interference power measuring unit is larger than a predetermined value, a length of at least one of the first period and the second period is set shorter than a length in a case in which the magnitude of the interference signal power or the channel fluctuation is small.

3. The base station as claimed in claim 1, wherein, when a magnitude of a channel fluctuation or the interference signal power measured by the uplink signal and interference power measuring unit is larger than a predetermined value, if the interference signal power exceeds a predetermined upper limit value, the SIR calculating unit sets the receive quality calculated using the predetermined upper limit value in lieu of the interference signal power as a receive quality for the transmit power control.

4. The base station as claimed in claim 1, wherein, when a magnitude of a channel fluctuation or the interference signal power measured by the uplink signal and interference power measuring unit is larger than a predetermined value, the SIR calculating unit sets the receive quality calculated using an interference signal power to which an offset value is added as a receive quality for the transmission power control.

5. The base station as claimed in claim 4, wherein the offset value is determined based on information which indicates a configuration of a cell which neighbors a cell of the base station.

6. The base station as claimed in claim 4, wherein the offset value is set to be a correction coefficient multiplied by a standard deviation or a variance value of an interference level measured by the uplink signal and interference power measuring unit.

7. The base station as claimed in claim 1, wherein when a magnitude of a channel fluctuation or the interference signal power that is measured by the uplink signal and interference power measuring unit is larger than a predetermined value, the SIR calculating unit increases a target value of the receive quality in the transmit power control.

8. The base station as claimed in claim 1, wherein the SIR calculating unit averages the desired signal power over a first period, averages the interference signal power over a second period, and calculates the receive quality for the transmit power control from the averaged desired signal power and the interference signal power; and
a length of at least one of the first period and the second period when the cell of the base station neighbors the second system is set shorter than the length when the cell of the base station does not neighbor the second system.

9. The base station as claimed in claim 1, wherein, an initial transmit power which is reported to the user apparatus when a magnitude of the interference signal power or the channel fluctuation measured by the uplink signal and interference power measuring unit is larger than a predetermined value is set stronger than that when the magnitude of the interference signal power or the channel fluctuation is not larger than the predetermined value.

10. The base station as claimed in claim 1, wherein the SIR calculating unit averages the desired signal power over a first period, averages the interference signal power over a second period, and calculates the receive quality for the transmit power control from the averaged desired signal power and the interference signal power; and
a length of at least one of the first period and the second period when the uplink signal transmitted by the user apparatus is a signal for voice communications is set shorter than the length when the uplink signal transmitted by the user apparatus is not the signal for voice communications.

11. A transmit power control method which is used in a base station in a first system which follows a transmission loss to control an uplink transmit power, wherein a part of cells in the first system neighbors cells in a second system which follows channel fading to control the uplink transmit power, the method including the steps of:
measuring a desired signal power and an interference signal power from a received signal;
calculating a receive quality for transmit power control from the desired signal power and the interference signal power;
generating transmit power control information in accordance with results of comparing the receive quality for the transmit power control with a predetermined target receive quality;
and transmitting, to a user apparatus, a control signal which includes the transmit power control information and resource information which indicates radio resources for an uplink signal, wherein the receive quality for the transmit power control is calculated with a calculating method in accordance with communications conditions in a cell of the base station.
